# FASCICULE DE BREVET EUROPEEN

(11) **EP 0 575 225 B1**
(45) Date de publication et mention de la délivrance du brevet: **02.11.1995**
(21) Numéro de dépôt: 93401469.7
(22) Date de dépôt: 09.06.1993
(51) Int. Cl.: F16L 41/12, F16L 41/06

(54) **Réseau de distribution d'un fluide sous pression et bride de dérivation utilisée dans ce réseau**
Verteilungssystem für ein unter Druck stehendes Fluid und ein in einem solchem Verteilungssystem benutztes Verteilungsstück
Distribution network for fluid under pressure and branch fitting used in said network

(30) Priorité: 15.06.1992 FR 9207188; 15.06.1992 FR 9207189
(43) Date de publication de la demande: 22.12.1993
(73) Titulaire: LEGRIS S.A., F-35000 Rennes (FR)
(72) Inventeur: Serot, Pierre, F-92260 Fontenay-aux-Roses (FR)
(74) Mandataire: Robert, Jean-Pierre

(56) Documents cités:
- FR-A- 1 190 133
- FR-A- 1 486 484
- US-A- 2 790 652
- US-A- 3 011 755
- US-A- 3 734 112
- US-A- 4 067 353

## Description

La présente invention concerne des moyens pour réaliser un réseau de distribution de fluide sous pression, notamment d'air comprimé, ce réseau comprenant une conduite principale de laquelle est dérivée une pluralité de conduites secondaires.

Actuellement la distribution d'air comprimé dans un local industriel tient de la plomberie en ce sens qu'elle est essentiellement réalisée sur mesure, en formant sur le site même de l'installation des tronçons de tubes pour les adapter à la géométrie du lieu, en connectant ces tronçons les uns aux autres pour réaliser une conduite principale continue circulant au droit des postes ou groupes de postes à desservir et en prévoyant sur cette ligne principale des piquages pour conduire le fluide comprimé jusqu'à son endroit d'utilisation. En général, la ligne principale de distribution se situe à un niveau supérieur du local industriel, les lignes dérivées constituant des descentes verticales à partir de cette ligne supérieure ou des lignes secondaires horizontales à partir desquelles une ramification verticale peut encore être installée.

Le plus souvent, les raccordements des lignes dérivées à la ligne principale sont réalisés par l'intermédiaire d'un col de cygne car, notamment dans le cas d'un réseau de distribution d'air comprimé, la partie inférieure de la ligne principale forme retenue d'eau de condensation et il convient de ne pas entraîner cette eau en direction des machines utilisatrices de l'air comprimé.

Par ailleurs US-A-2 790 652 décrit une bride pour un départ horizontal d'une conduite secondaire.

La présente invention entend remédier aux inconvénients des installations traditionnelles, c'est-à-dire à une mise en place longue et coûteuse et surtout dans une géométrie figée qui ne permet pas d'évolution alors que les processus industriels actuels, notamment de fabrication, d'assemblage ou de montage, requièrent des installations évolutives en ce qui concerne leur disposition au sol et le nombre des unités individuelles de travail qu'elles mettent en oeuvre.

Pour mieux satisfaire cette demande du monde industriel moderne, la présente invention a pour premier objet un réseau de distribution d'un fluide sous pression comportant une conduite principale sensiblement horizontale, située à un niveau supérieur, de laquelle sont dérivées des conduites secondaires horizontales ou verticales, dans lequel réseau la jonction entre la conduite principale et une conduite secondaire est réalisée au moyen d'une bride de dérivation présentant une zone de recouvrement d'au moins un orifice ménagé dans le demi-cylindre supérieur de la paroi de la conduite principale, zone dans laquelle débouche une première extrémité d'un conduit de dérivation interne à la bride, l'autre extrémité de ce conduit étant équipée d'un moyen de raccordement de la bride à la conduite secondaire, l'axe de la première extrémité du conduit de dérivation et l'axe de ces moyens de raccordement formant un angle obtus, s'il est mesuré entre ces axes orientés dans le sens de l'écoulement du fluide dans le conduit de dérivation. Une telle bride de raccordement comporte donc en elle-même les moyens qui assurent le même résultat que celui d'un col de cygne.

De manière préférée, l'angle sous lequel se coupent l'axe de la première extrémité et l'axe des moyens de raccordement de la bride est de 135°. Par ailleurs et de manière avantageuse, ces axes se coupent sur l'axe de la conduite principale lorsque la bride est montée sur cette conduite ce qui permet de rendre l'axe de la conduite principale et l'axe de la conduite secondaire sécants avec en conséquence, une meilleure répartition des forces pouvant s'exercer entre ces deux conduites (suppression d'une composante de torsion engendrée par ses forces lorsque les moyens de raccordement sont décalés par rapport à l'axe de la conduite principale).

Selon le débit dont on désire disposer dans la conduite secondaire, la paroi de la conduite principale comporte un ou plusieurs orifices, toujours dans sa partie demi-cylindrique supérieure, ces orifices étant recouverts par une zone unique de la bride.

Le second objet de l'invention concerne la bride de dérivation elle-même pour réaliser dans un réseau conforme à celui décrit ci-dessus le raccordement d'une conduite secondaire de distribution à une conduite principale, cette bride comportant deux demi-colliers articulés l'un à l'autre et présentant à leur extrémité libre des moyens correspondants pour assurer la fermeture de la bride et son serrage sur la conduite principale, l'un des demi-colliers comportant de manière interne le conduit de dérivation susdit tel que défini précédemment, dont la première extrémité débouche dans la zone de recouvrement par au moins une ouverture prolongée par un embout de centrage de la bride sur l'orifice de la conduite principale. Cet embout de centrage est le moyen permettant d'assurer le montage correct de la bride sur la conduite principale. Il constitue également un moyen d'indexation dont on connaît parfaitement la position par rapport à l'embout de raccordement de la bride, qui permet, par rotation du tronçon de conduite principale sur lequel la bride est montée d'assurer que le piquage de la conduite secondaire sur la conduite principale est réalisé au-dessus du niveau de l'eau qui pourrait stagner dans cette conduite.

D'autres avantages ressortiront de la description donnée ci-après d'exemples de réalisation de l'invention.

Il sera fait référence aux dessins annexés parmi lesquels :
- la figure 1 est une vue en coupe transversale d'une conduite principale d'un réseau conforme à l'invention et d'une bride ouverte destinée à réaliser une dérivation de cette conduite principale,
- la figure 2 illustre l'installation d'une bride conforme à l'invention sur une conduite principale disposée dans l'angle supérieur d'un local, la conduite de dérivation étant dirigée vers le bas,
- la figure 3 est une figure identique à celle de la figure 2 dans laquelle la conduite de dérivation est dirigée horizontalement au même niveau que la conduite principale,
- les figures 4 et 5 illustrent les moyens additionnels d'une bride selon l'invention pour sa mise en place sur une conduite principale non percée.
- la figure 6 illustre la fixation d'une bride de dérivation conforme à l'invention dans laquelle les moyens de raccordement de cette bride à la conduite dérivée sont décalés par rapport à l'axe de la conduite principale,
- la figure 7 est une vue extérieure d'une bride selon l'invention à deux orifices de piquage,
- la figure 8 est une coupe selon la ligne VIII-VIII de la figure 7.
- la figure 9 est une vue suivant F de la figure 8.

Aux dessins, la référence 1 désigne une conduite principale du réseau de distribution de fluide sous pression conforme à l'invention.

On appellera conduite principale dans ce qui suit toute conduite du réseau qui comporte une dérivation c'est-à-dire un piquage duquel part une autre conduite.

La conduite principale 1 est pourvue d'un orifice 2 dont le diamètre est tel qu'il reste embrassé par un angle au centre, vu en section, inférieur à 90°. Cette condition permet de conserver à la paroi du tube 1 suffisamment de rigidité lorsqu'il est enserré par la bride de dérivation décrite ci-après. Au cas où une plus grande section de passage serait nécessaire pour satisfaire les besoins desservis par la conduite secondaire dérivée de la conduite principale 1, on multipliera par deux ou trois le nombre d'orifices le long d'une même génératrice de la conduite 1.

Une dérivation de cette conduite 1 est obtenue, conformément à l'invention, par la mise en place d'une bride 3 dont les caractéristiques essentielles sont les suivantes. Tout d'abord elle comporte une zone 4 susceptible d'être placée en recouvrement étanche sur la région du tube voisine de l'orifice 2. Ensuite elle comporte un conduit de dérivation 5 dont une première extrémité 6 débouche au niveau de cette zone 4 de manière à pouvoir être placée en regard de l'orifice 2, et dont une seconde extrémité 7 possède des moyens de raccordement pour le conduit secondaire à dériver de la conduite 1. Enfin, une dernière caractéristique principale de cette bride de raccordement est que l'axe de l'extrémité 6 du conduit de dérivation 5 noté A sur les figures forme un angle obtus a avec l'axe B des moyens de raccordement 8 disposés à l'autre extrémité du conduit de dérivation 5. Dans le cas des figures, cet angle a est égal à 135°. On notera que l'angle a est mesuré entre les axes orientés dans le sens de circulation du fluide dans le conduit 5 de dérivation, c'est-à-dire entre le vecteur E colinéaire de l'axe A et le vecteur S colinéaire de l'axe B. Dans ces conditions, la bride présente les caractéristiques d'un raccordement à col de cygne.

Une autre caractéristique de cette bride de dérivation réside dans le fait que l'extrémité 6 du conduit 5 débouche dans la zone 4 de la bride 3 au travers d'un embout 9 qui fait saillie par rapport à la surface qui délimite cette zone 4 de manière à pouvoir être introduit dans l'orifice 2. Cet embout a pour première fonction d'indexer l'extrémité 6 par rapport à l'orifice 2 de manière à rendre certaine la jonction entre le volume intérieur de la conduite 1 et le volume intérieur du conduit de dérivation 5.

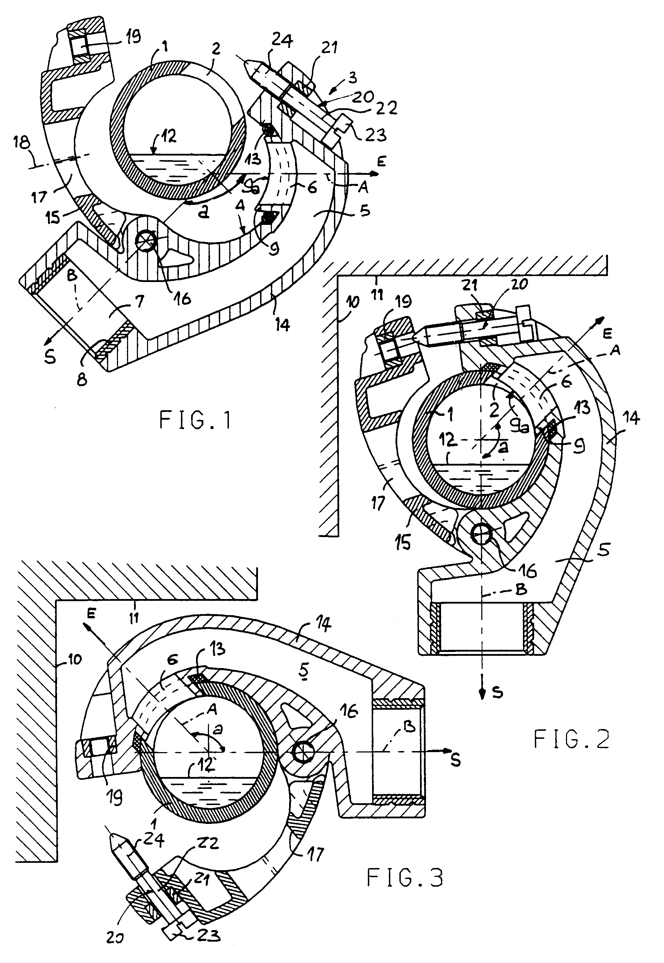

Les figures 2 et 3 illustrent le fait qu'une conduite principale 1 est généralement située dans un angle supérieur formé par une paroi verticale 10 et un plafond 11 d'un local industriel. Les canalisations de dérivation issues de cette conduite principale n'ont en pratique que deux directions possibles : l'une verticale et la bride de raccordement est disposée dans l'orientation illustrée par la figure 2, et l'autre horizontale, la bride étant alors placée dans la disposition de la figure 3. On comprend, au vu de ces figures, que, grâce à la structure et les caractéristiques énoncées ci-dessus de la bride, la simple orientation de la bride pour un départ horizontal ou un départ vertical, impose de placer correctement l'orifice 2 c'est-à-dire dans la partie supérieure de la paroi cylindrique de la conduite 1, au-dessus du niveau d'eau 12 de condensation que pourrait retenir cette conduite 1. En effet, en supposant que l'orifice 2 soit ménagé dans un tronçon de conduite 1 qui soit libre de tourner autour de son axe parce que, par exemple, non définitivement accouplé par ses extrémités au reste du réseau, l'opérateur pour disposer la bride 3 sur ce tronçon, devra introduire l'embout 9 dans l'orifice 2 et orienter ce tronçon pour obtenir un départ horizontal ou vertical comme souhaité. Pour que cette bride puisse être convenablement fixée, il faut que l'opérateur puisse accéder aux organes de serrage et de fixation qui sont décrits ci-après. Cet accès sera toujours possible quelle que soit la disposition de ces organes, si le tronçon de conduite 1 peut être manoeuvré en rotation autour de son axe. Il le sera également si la bride 3 est prémontée sur un tronçon de conduite 1 avant la mise en place de ce tronçon dans l'angle de la paroi 10 et du plafond 11.

La zone 4 destinée à recouvrir la portion de canalisation 1 entourant l'orifice 2 présente autour de l'embout 9 une gorge susceptible de former un support pour un joint 13 torique.

La bride 3 comporte donc une première pièce 14 qui incorpore le conduit de dérivation 5, se terminant par l'embout 9 et par les moyens de raccordement 8, qui délimitent la zone 4 équipée du joint d'étanchéité 13. Cette zone 4 étant sensiblement demi-cylindrique, la bride 3 comporte une seconde pièce 15 articulée à la pièce 14 autour d'un axe 16 parallèle à l'axe de la zone 4, cette pièce 15 formant un demi-collier capable de coopérer avec la zone 4 pour ceinturer complètement la canalisation 1. L'axe d'articulation 16 sera de préférence formé par une goupille standard élastique. De la même manière que la zone 4, cette pièce 15 possède donc une surface interne sensiblement demi-cylindrique.

A l'opposé de l'axe d'articulation 16 qui les réunit, le corps 14 et la pièce 15 possèdent des moyens permettant de relier leurs extrémités libres. Ces moyens comportent un écrou 19 enchâssé dans l'extrémité libre du demi-collier 15 (figures 1, 2, 4, 5, 6 et 8) tandis que la pièce 14 possède une vis 20 retenue dans l'orifice d'une patte d'extrémité de cette pièce 14 (voir les mêmes figures) par un écrou 21 enchâssé dans cette patte.

A la figure 3 on remarquera que l'écrou 19 est porté par la pièce 14 elle-même tandis que la vis 20 est située à l'extrémité du demi-collier 15. Il peut être en effet avantageux de pouvoir inverser les moyens de serrage de la bride sur le conduit 1 afin qu'ils soient accessibles dans les deux positions de la bride illustrée par les figures 2 et 3, en supposant que le tronçon de conduite 1 soit immobilisé avant la mise en place de la bride. Cette inversion est possible grâce au fait que les écrous 19 et 21 sont identiques et que la vis possède une partie lisse 22 entre sa tête 23 et son extrémité filetée 24, la partie filetée 24 pouvant coopérer avec chacun des écrous 19 et 21 tandis que la partie lisse 22 est d'un diamètre inférieur à celui intérieur en sommet de filet des écrous. Ainsi, selon l'orientation de la vis 20, les écrous 19 et 21 jouent le rôle soit d'une bague de retenue rendant la vis imperdable une fois que l'on a fait passer son embout fileté 24 au travers de cette bague, soit de l'écrou devant recevoir la vis 20 pour fermer la bride.

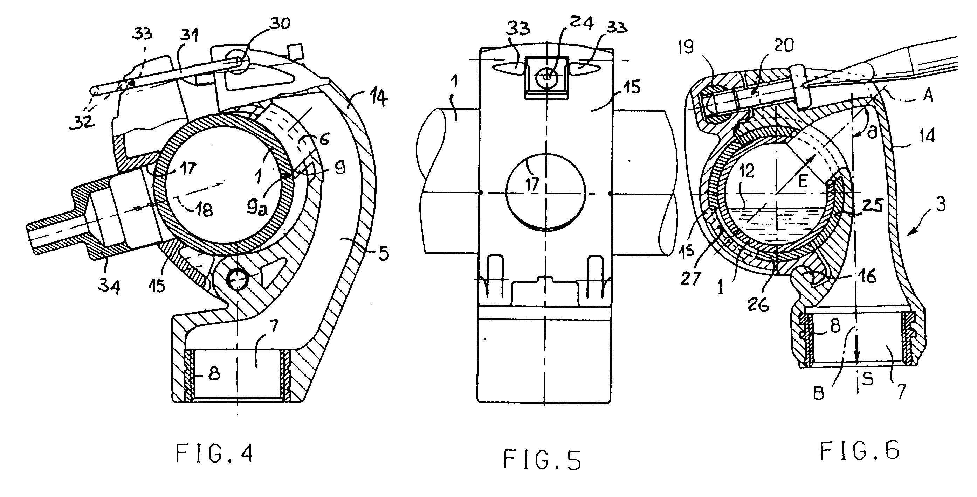

Il faut remarquer sur les figures 1 à 3 la présence dans le demi-collier 15 d'une ouverture cylindrique 17 dont l'axe 18 s'étend dans la direction d'un rayon de la surface cylindrique intérieure de ce demi-collier. Le diamètre de cette ouverture est en relation avec le diamètre de l'orifice 2 que doit comporter le tube 1 pour accueillir une bride selon l'invention, comme décrit ci-après en regard des figures 4 et 5.

La bride 3, conforme aux figures précédentes, est représentée en coupe partielle à la figure 4 et en vue extérieure pour les extrémités libres des demi-colliers 14 et 15. L'extrémité libre de la partie 14 comporte deux logements cylindriques 30, borgnes, parallèles à l'axe du tube 2 sur lequel la bride est montée. Chacun de ces logements reçoit les extrémités libres des branches d'un étrier 31 en fil métallique qui peut y pivoter. Ce cavalier comporte, à l'opposé de ces extrémités placées dans les logements 30, une traverse 32 qui est d'une forme adaptée pour être encliquetée élastiquement dans une rainure 33 ménagée dans la surface extérieure de l'extrémité libre du demi-collier 15 lorsque celui-ci est refermé sur le demi-collier 14 autour du tube 1.

Le tube 1 ne possède pas l'orifice 2 des figures précédentes. La bride est alors maintenue refermée sur ce tube au moyen de l'étrier 31. La face concave du demi-collier 15 qui est une surface cylindrique est appuyée contre le tube tandis que l'autre partie 14 de la bride est en appui sur le tube d'extrémité de l'embout 9 qui présente une surface annulaire cylindrique 9a pour pouvoir épouser correctement la surface extérieure du tube 1, lorsqu'il n'est pas coaxial à la bride.

La bride ainsi provisoirement fixée sur le tube offre par l'ouverture 17 qu'elle présente dans le demi-collier 15, un guide de perçage pour, par exemple un foret cloche 34 qui réalisera de manière propre l'orifice 2. Ce foret agit par frottement sur la surface du tube de manière à provoquer sa fusion et la découpe d'une pastille sans formation de copeaux, la pastille découpée restant solidaire du foret.

L'orifice réalisé, on démonte la bride en soulevant l'étrier 31 pour loger l'embout 9 dans l'orifice qui vient d'être réalisé.

La figure 6 est la représentation en coupe d'une variante de réalisation d'une bride selon l'invention dans laquelle la zone 4 destinée à recouvrir la portion de tube 1 entourant l'orifice 2 présente une surface cylindrique de support d'un ou plusieurs joints 25 qui sont à l'origine plans pour être ensuite plaqués et courbés sur la surface concave de la zone 4 et indexés en position dans cette zone 4 grâce aux embouts 9 qui forme tétons de centrage et de maintien de ces joints. L'épaisseur des joints sera choisie en fonction du diamètre extérieur de la canalisation 1 et ce pour tenir compte des variations dimensionnelles dues aux tolérances de fabrication de cette canalisation ou pour compenser les différences existantes entre une bride prévue pour un tube d'un diamètre métrique déterminé et pouvant s'adapter au tube de diamètre le plus voisin mesuré en pouces. Bien entendu il existera une gamme de brides 3 dont les diamètres de la zone 4 correspondront à des dimensions nominales de tube 1.

De la même manière que la zone 4, la pièce 15 possède donc une surface interne sensiblement demi-cylindrique qui porte des joints d'étanchéité 26 dont l'épaisseur sera choisie pour assujettir étroitement la bride 3 sur la canalisation 1 lorsque le demi-collier 15 sera refermé sur la pièce 14. Il sera avantageux que les joints 26 soient identiques aux joints 25 et que pour leur mise en position correcte dans le demi-collier 15, ce dernier comporte un ou deux tétons 27 de diamètre extérieur égal au diamètre extérieur des embouts 9 pour assurer le maintien et le centrage de ces joints 26 dans le demi-collier 15.

La figure 6 illustre également le fait que l'axe B de l'extrémité 7 avec les moyens de raccordement 8 de cette bride est déporté, contrairement aux autres figures où cet axe B coupe l'axe A sur l'axe de la conduite 1.

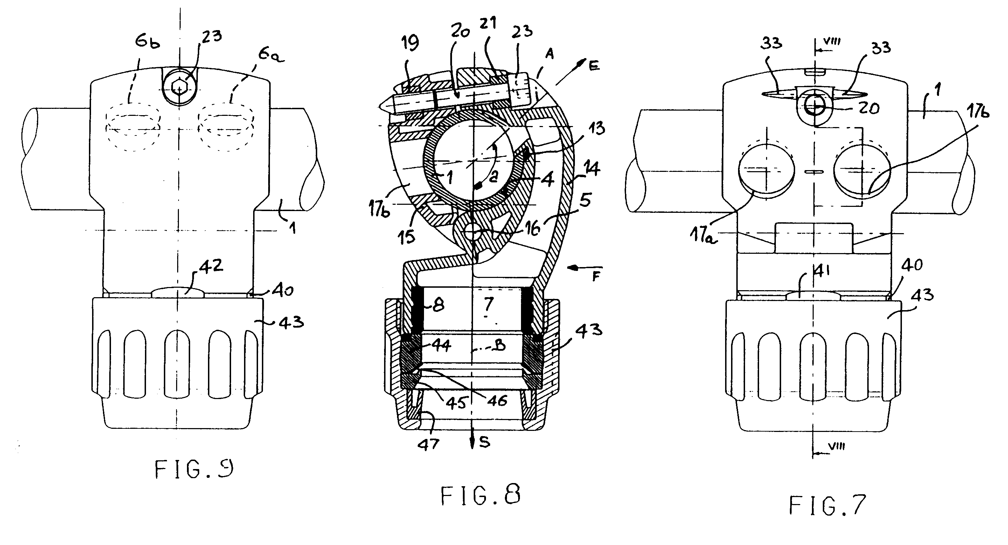

Aux figures 7 à 9 on a représenté une bride conforme à l'invention destinée à une dérivation de diamètre nominal plus important que celui des dérivations réalisées avec les brides précédemment décrites. Le diamètre nominal de la dérivation est ici égal au diamètre de la conduite principale.

Sur ces figures on retrouve la plupart des éléments déjà décrits avec les mêmes références. Le canal 5 interne à la pièce 14 débouche par deux orifices 6a, 6b sur la surface 4 qui sont prolongés chacun par un embout 9 autour duquel une gorge est ménagée pour accueillir un joint torique d'étanchéité 13. La somme des sections de ces embouts 6a, 6b est égale à la section de passage du tube principal 1 et à celle de la dérivation.

De manière symétrique, la pièce 15 de la bride possède deux orifices 17a, 17b qui, comme l'orifice 17 précédemment décrit, forment des guides de perçage pour un foret-cloche destiné à la réalisation de deux orifices 2 à un entraxe ainsi parfaitement défini qui correspond à l'entraxe des deux embouts prolongeant les orifices 6a et 6b.

La bride représentée à ces figures 7 à 9 est de largeur plus importante que celle des figures précédentes pour couvrir deux orifices adjacents sur le tube et comporter les deux orifices 6a et 6b. A la figure 7 on remarquera la présence de la gorge 33 destinée à recevoir par encliquetage un étrier de maintien semblable (mais plus large) à celui 31 décrit précédemment.

On aura enfin noté que la bride représentée à ces dernières figures comporte du côté de l'extrémité 7 du conduit 5 interne à la pièce 14 d'une part les moyens 8 de raccordement précédemment décrits et d'autre part des moyens complémentaires pour réaliser ce raccordement différemment en alternative avec les moyens 8.

Les moyens 8 sont constitués par un insert taraudé destiné à recevoir un embout fileté de la canalisation de dérivation. Les autres moyens comportent un filetage externe 40 porté par l'extrémité cylindrique de la pièce 14 entourant l'extrémité 7 du conduit 5. Ce filetage externe est interrompu par deux méplats 41 et 42 diamétralement opposés, qui sont placés au niveau du plan de joint de moulage de la pièce 14 pour éviter que la bavure existant à ce niveau ne vienne interférer avec le filetage et en constitue un défaut de forme.

Le filetage 40 peut recevoir un écrou 43 qui comprend à l'intérieur, de manière connue, un empilement de deux manchons 44 et 45 entre lesquels une bague déformable 46 à dents peut être déformée depuis un état libre où son diamètre intérieur est supérieur au diamètre extérieur du tube qui constitue la canalisation de dérivation (non représenté) et un état contraint ou armé dans lequel le diamètre intérieur de la bague 46 est plus petit que ce diamètre de tube si bien que les dents viennent mordre dans la paroi de ce tube et en constituent un moyen de retenue par rapport à l'écrou 43. La déformation de la bague 46 est obtenue en comprimant l'empilement des manchons 44 et 45, en vissant l'écrou.

Cet arrangement, connu en lui-même comporte un joint à lèvre pour réaliser l'étanchéité entre l'écrou et la bride.

Le tube de la dérivation est introduit dans l'écrou jusqu'à venir buter contre l'insert 8. Le serrage ultérieur de l'écrou assure la retenue du tube. On peut cependant serrer l'écrou avant l'introduction du tube : on réalise alors un raccord à connexion instantanée à l'extrémité de la bride de dérivation.

Une bride conforme à l'invention sera mise sur le marché de préférence dans un emballage unique avec un foret pour la réalisation du ou des orifices 2 dans le tube 1 en matière plastique. L'utilisateur pourra ainsi réaliser sur ce tube les perçages qui lui conviennent aux endroits appropriés de son installation.

## Revendications

1. Réseau de distribution d'un fluide sous pression comportant une conduite principale (1) sensiblement horizontale située à un niveau supérieur (10, 11), de laquelle sont dérivées des conduites secondaires, la jonction entre la conduite principale (1) et une conduite secondaire est réalisée au moyen d'une bride (3) de dérivation présentant une zone (4) de recouvrement d'au moins un orifice (2) ménagé dans le demi-cylindre supérieur de la paroi de la conduite principale (1), dans laquelle zone débouche une première extrémité (6) d'un conduit de dérivation (5) interne à la bride, l'autre extrémité de ce conduit (5) étant équipé de moyens de raccordement (8) de la bride à la conduite secondaire, caractérisé en ce que les conduites secondaires sont horizontales ou verticales et en ce que l'axe (A) de la première extrémité (6) du conduit de dérivation (5) et l'axe (B) de ces moyens de raccordement (8) formant un angle a qui est obtus s'il est mesuré entre ces axes orientés dans le sens de l'écoulement (E,S) du fluide dans le conduit de dérivation (5).

2. Réseau selon la revendication 1, caractérisé en ce que l'angle (a) est de 135°.

3. Réseau selon la revendication 1 ou la revendication 2, caractérisé en ce que les axes (A) et (B) se coupent sur l'axe de la conduite principale (1).

4. Réseau selon la revendication 1 caractérisé en ce que la paroi de la conduite principale (1) comporte plusieurs orifices (2) recouverts par une zone (4) unique de la bride (3).

5. Bride de dérivation pour réaliser, dans un réseau selon la revendication 1, le raccordement d'une conduite secondaire de distribution à la conduite principale (1), ladite bride comportant deux demi-colliers (14, 15), articulés l'un à l'autre (16) et présentant à leur extrémité libre des moyens (19, 20) pour assurer la fermeture de la bride (3) et son serrage sur la conduite principale (1), l'un des demi-colliers (14) se présentant sous la forme d'un corps ayant une zone (4) de recouvrement dans laquelle zone débouche une première extrémité (6) d'un conduit de dérivation (5) interne à la bride, l'autre extrémité (7) de ce conduit (5) étant équipé de moyens de raccordement (8, 40-43) de la bride à la conduite secondaire, caractérisée en ce que l'axe (A) de la première extrémité (6) du conduit de dérivation (5) et l'axe (B) de ces moyens de raccordement (8) formant un angle a qui est obtus s'il est mesuré entre ces axes orientés dans le sens de l'écoulement (E,S) du fluide dans le conduit de dérivation (5), la première extrémité (6) débouchant dans la zone de recouvrement (4) par au moins une ouverture prolongée par un embout (9) de centrage de la bride (3) sur l'orifice (2) de la conduite principale (1).

6. Bride selon la revendication 5 caractérisée en ce que le demi-collier (14) équipé de l'embout (9) porte un joint torique (13) d'étanchéité à la racine de cet embout.

7. Bride selon la revendication 5, caractérisée en ce que les moyens de serrage des demi-colliers (14, 15) comportent au moins une vis imperdable (20) sur un des demi-colliers et un écrou (19) sur l'autre.

8. Bride selon la revendication 7, caractérisée en ce que la vis imperdable (20) est retenue par un écrou (21) coopérant avec une section (22) de la vis non filetée entre son extrémité filetée (24) et sa tête (23).

9. Bride selon la revendication 5, caractérisée en ce que le demi-collier (15) dépourvu de conduit interne comporte un guide de perçage (17) pour un outil (34) de réalisation de l'orifice (2) dans la conduite principale (1), la bride comportant des moyens (31) de maintien temporaire des demi-colliers refermés sur la conduite (1) dépourvue d'orifice (2).

10. Bride de dérivation selon la revendication 5, caractérisée en ce qu'elle comporte plusieurs orifices (6a, 6b), l'un d'eux au moins étant prolongé d'un embout de centrage de la bride dans l'un des orifices correspondants de la conduite principale (1).

11. Bride selon la revendication 5, caractérisée en ce que chaque demi-collier (14, 15) est équipé d'un joint plan (25, 26) pourvu d'au moins un orifice.

12. Bride selon la revendication 11, caractérisée en ce que les deux joints plans (25, 26) d'une même bride sont identiques, le demi-collier (15) dépourvu de conduit de dérivation (5) comportant un téton (27) de centrage du joint, de même diamètre que l'embout (9) de centrage de la bride (3) sur la conduite principale (1).

13. Bride selon la revendication 5, caractérisée en ce que l'extrémité (7) du conduit interne (5) est équipée de moyens de connexion instantanée (40-43) de la conduite de dérivation.

14. Ensemble pour réaliser au moins une dérivation dans un réseau de distribution de fluide, caractérisé en ce qu'il comporte une bride conforme à la revendication 9 et un foret cloche du diamètre correspondant au diamètre extérieur de l'embout (9) réunis dans un même emballage.

## Claims

1. A network for distributing a fluid under pressure, the network comprising a substantially horizontal main pipe (1) situated at an upper level (10, 11), with secondary pipes branching therefrom, in which the junction between the main pipe (1) and a secondary pipe is provided by means of a branch clamp (3) having a zone (4) for covering at least one orifice (2) formed in the top half-cylinder of the wall of the main pipe (1), into which zone there opens out a first end (6) of a branch duct (5) internal to the clamp, the other end of said duct (5) being fitted with coupling means (8) for coupling the clamp to the secondary pipe, characterized in that the secondary pipes are horizontal or vertical and in that the axis (A) of the first end (6) of the branch duct (5) and the axis (B) of said coupling means (8) forming an angle a which is obtuse when measured between said axes in the flow direction (E, S) of fluid flowing along the branch duct (5).

2. A network according to claim 1, characterized in that the angle (a) is 135°.

3. A network according to claim 1 or claim 2, characterized in that the axes (A, B) intersect on the axis of the main pipe (1).

4. A network according to claim 1, characterized in that the wall of the main pipe (1) includes a plurality of orifices (2) covered by a single zone (4) of the clamp (3).

5. A branch clamp for use in a network according to claim 1 for coupling a secondary distribution pipe to the main pipe (1), comprising two half-collars (14, 15) that are hinged to each other (16) and that have fastening means (19, 20) at their free ends for closing the clamp (3) and tightening it onto the main pipe (1), one of the half-collars (14) being in the form of a body having a covering zone (4) into which zone there opens out a first end (6) of a branch duct (5) internal to the clamp, the other end of the duct (5) being fitted with coupling means (8, 40-43) for coupling the clamp to the secondary pipe, characterized in that the axis (A) of the first end (6) of the branch duct (5) and the axis (B) of said coupling means (8) forming an angle a which is obtuse when measured between said axes in the flow direction (E, S) of the fluid flowing along the branch duct (5), the first end (6) opening out into the covering zone (4) via an opening that is extended by an endpiece (9) for centering the clamp (3) on the orifice (2) in the main pipe (1).

6. A clamp according to claim 5, characterized in that the half-collar (14) fitted with the endpiece (9) carries a sealing ring (13) at the base of said endpiece.

7. A clamp according to claim 5, characterized in that the fastening means between the half-collars (14, 15) comprise at least one captive screw (20) on one of the half-collars and a nut (19) on the other one.

8. A clamp according to claim 7, characterized in that the captive screw (20) is held captive by a nut (21) that co-operates with a non-threaded section (22) of the screw shank between a threaded end (24) and a head (23).

9. A clamp according to claim 5, characterized in that the half-collar (15) that does not have the internal duct (5) includes a drilling jig (17) for guiding a tool (34) for making the orifice (2) in the main pipe (1), the clamp including means (31) for temporarily holding the half-collars in a closed position on the pipe (1) without the orifice (2).

10. A branch clamp according to claim 5, characterized in that it includes a plurality of orifices (6a, 6b), with at least one of them being extended by an endpiece for centering the clamp in one of the corresponding orifices of the main pipe (1).

11. A clamp according to claim 5, characterized in that each half-collar (14, 15) is fitted with a plane gasket (25, 26) provided with at least one orifice.

12. A clamp according to claim 11, characterized in that the two plane gaskets (25, 26) of a given clamp are identical, the half-collar (15) that does not include a branch duct (5) including a gasket centering stud (27) of the same size as the endpiece (9) for centering the clamp (3) on the main pipe (1).

13. A clamp according to claim 5, characterized in that the end (7) of the internal duct (5) is fitted with instantaneous connection means (40-43) for the branch pipe.

14. A kit for making at least one branch connection in a fluid distribution network, characterized in that it comprises, in a single package, a clamp according to claim 9, and a bell-shaped drill bit of diameter corresponding to the outside diameter of the endpiece (9).

## Patentansprüche

1. Verteilernetz für ein unter Druck stehendes Fluid, mit einer auf einem oberen Niveau (10,11) gelegenen, im wesentlichen horizontalen Hauptleitung (1), von welcher Nebenleitungen abgezweigt sind, wobei die Verbindung zwischen der Hauptleitung (1) und einer Nebenleitung mittels eines Abzweigflansches (3) erfolgt, der eine zum Verdecken zumindest einer in dem oberen Halbzylinder der Wand der Hauptleitung (1) ausgebildeten Öffnung (2) vorgesehene Zone (4) hat, in welcher ein erstes Ende (6) eines internen Abzweigkanals (5) in dem Flansch mündet, wohingegen das andere Ende dieses Kanals (5) mit Mitteln (8) für den Anschluß des Flansches an die Nebenleitung versehen ist, dadurch gekennzeichnet, daß die Nebenleitungen horizontal oder vertikal verlaufen und daß die Achse (A) des ersten Endes (6) des Abzweigkanals (5) und die Achse (B) dieser Anschlußmittel (8) einen Winkel a bilden, der stumpf ist, wenn er zwischen diesen in Strömungsrichtung (E,S) des Fluids in dem Abzweigkanal (5) orientierten Achsen gemessen wird.

2. Netz nach Anspruch 1, dadurch gekennzeichnet, daß der Winkel (a) 135° beträgt.

3. Netz nach Anspruch 1 oder 2, dadurch gekennzeichnet, daß sich die Achsen (A) und (B) an der Achse der Hauptleitung (1) überschneiden.

4. Netz nach Anspruch 1, dadurch gekennzeichnet, daß die Wand der Hauptleitung (1) mehrere Öffnungen (2) hat, die von einer einzigen Zone (4) des Flansches (3) verdeckt werden.

5. Abzweigflansch zum Ausführen des Anschlusses einer Nebenverteilungsleitung an die Hauptleitung (1) in einem Verteilernetz gemäß Anspruch 1, wobei dieser Flansch zwei Halbschellen (14,15) hat, die aneinander angelenkt (16) und an ihrem freien Ende mit Mitteln (19,20) zum Schließen und Festspannen des Flansches (3) an der Hauptleitung (1) versehen sind, wobei eine der Halbschellen (14) in Form eines Körpers vorgesehen ist, der eine Abdeckzone (4) besitzt, in welcher ein erstes Ende (6) eines internen Abzweigkanals (5) in dem Flansch mündet, während das andere Ende (7) dieses Kanals (5) mit Mitteln (8,40-43) für den Anschluß des Flansches (3) an die Nebenleitung versehen ist, dadurch gekennzeichnet, daß die Achse (A) des ersten Endes (6) des Abzweigkanals (5) und die Achse (B) dieser Anschlußmittel (8) einen Winkel a bilden, der stumpf ist, wenn er zwischen diesen in der Strömungsrichtung (E,S) des Fluids in dem Abzweigkanal (5) orientierten Achsen gemessen wird, wobei das erste Ende (6) durch zumindest eine Öffnung, die durch einen Ansatz (9) für die Zentrierung des Flansches (3) an der Öffnung (2) der Hauptleitung (1) verlängert ist, in die Abdeckzone (4) mündet.

6. Flansch nach Anspruch 5, dadurch gekennzeichnet, daß die mit dem Ansatz (9) versehene Halbschelle (14) am Fuß dieses Ansatzes eine torusförmige Ringdichtung (13) trägt.

7. Flansch nach Anspruch 5, dadurch gekennzeichnet, daß die Mittel zum Zusammenspannen der Halbschellen (14,15) zumindest eine unverlierbare Schraube (20) an einer der Halbschellen und eine Mutter (19) an der anderen Halbschelle umfassen.

8. Flansch nach Anspruch 7, dadurch gekennzeichnet, daß die unverlierbare Schraube (20) durch eine Mutter (21) gehalten wird, die mit einem gewindefreien Abschnitt (22) der Schraube zwischen ihrem Gewindeende (24) und ihrem Kopf (23) zusammenwirkt.

9. Flansch nach Anspruch 5, dadurch gekennzeichnet, daß die Halbschelle (15), die nicht mit dem internen Kanal versehen ist, eine Bohrführung (17) für ein Werkzeug (34) zum Einbringen der Öffnung (2) in die Hauptleitung (1) hat und daß der Flansch Mittel (31) zum vorübergehenden Halten der um die Leitung (1), die nicht mit der Öffnung (2) versehen ist, geschlossenen Halbschellen umfaßt.

10. Abzweigflansch nach Anspruch 5, gekennzeichnet durch mehrere Öffnungen (6a,6b), wovon zumindest eine durch einen Ansatz für die Zentrierung des Flansches in einer der entsprechenden Öffnungen der Hauptleitung (1) verlängert ist.

11. Flansch nach Anspruch 5, dadurch gekennzeichnet, daß jede Halbschelle (14,15) mit einer zumindest eine Öffnung aufweisenden Flachdichtung (25,26) versehen ist.

12. Flansch nach Anspruch 11, dadurch gekennzeichnet, daß die beiden Flachdichtungen (25,26) ein- und desselben Flansches identisch sind und daß die Halbschelle (15), die nicht mit dem Abzweigkanal (5) versehen ist, einen Zapfen (27) zum Zentrieren der Dichtung hat, dessen Durchmesser derselbe ist wie der Durchmesser des Ansatzes (9) zum Zentrieren des Flansches (3) an der Hauptleitung (1).

13. Flansch nach Anspruch 5, dadurch gekennzeichnet, daß das Ende (7) des internen Kanals (5) mit Mitteln (40-43) für den Schnellanschluß der Zweigleitung versehen ist.

14. Montagesatz zum Ausführen zumindest einer Abzweigung in einem Verteilernetz für ein Fluid, dadurch gekennzeichnet, daß dieser einen Flansch gemäß Anspruch (9) und einen diesem beigepackten Glockenbohrer mit einem dem Außendurchmesser des Ansatzes (9) entsprechenden Durchmesser hat.
